(19) **Europäisches Patentamt**
**European Patent Office**
**Office européen des brevets**

(11) **EP 2 780 123 B1**

(12) **EUROPEAN PATENT SPECIFICATION**

(45) Date of publication and mention
of the grant of the patent:
**12.07.2017 Bulletin 2017/28**

(21) Application number: **12848750.1**

(22) Date of filing: **13.11.2012**

(51) Int Cl.:
**B05D 5/06** (2006.01)  **B05D 7/00** (2006.01)
**B05D 1/36** (2006.01)  **C09D 5/38** (2006.01)

(86) International application number:
**PCT/IB2012/003112**

(87) International publication number:
**WO 2013/098654 (04.07.2013 Gazette 2013/27)**

(54) **A LIQUID METAL COMPOSITION**

FLÜSSIGMETALLZUSAMMENSETZUNG

COMPOSITION DE MÉTAL LIQUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2011 US 201161559495 P**

(43) Date of publication of application:
**24.09.2014 Bulletin 2014/39**

(73) Proprietor: **BASF Coatings GmbH**
**48165 Münster (DE)**

(72) Inventors:
• **DECEMBER, Timothy**
**Rochester Hills, MI 48307 (US)**
• **MENOVCIK, Gregory**
**Culver City, CA 90230 (US)**
• **SWAIN, Scott**
**New Hudson, MI 48165 (US)**
• **CZORNIJ, Zenon, Paul**
**Brighton, MI 48116-9419 (US)**
• **MCDERMOTT, Brian**
**South Lyon, MI 48178 (US)**

• **LALAMA, Mark**
**Brighton, MI 48116 (US)**
• **DUDEK, Paul**
**Plymouth, MI 48170 (US)**
• **FRYE, Joseph**
**Taylor, MI 48180 (US)**

(74) Representative: **BASF IP Association**
**BASF SE**
**G-FLP-C006**
**67056 Ludwigshafen (DE)**

(56) References cited:
**EP-A- 0 990 682**  **EP-A1- 1 591 492**
**EP-A1- 2 158 280**  **WO-A1-2006/056870**
**WO-A1-2010/069823**

• **FRANK HEZEL, NORBERT LÖW, STEPHAN
SCHWARTE: "Liquid Metal Ein Lack, der aussieht
wie Metall", JOURNAL FÜR
OBERFLÄCHENTECHNIK, vol. 51, no. 9, 7
January 2011 (2011-01-07), pages 26-31, ISSN:
0940-8789**

**Description**

BACKGROUND OF THE INVENTION

1. Field of the Invention

The subject invention generally relates to a liquid metal composition, a multi-layered coating system, and a method of forming the multi-layered coating system.

2. Description of the Related Art

Automobile manufacturers are becoming increasingly competitive in the marketplace. To compete, automobile manufacturers must provide cars that appeal to consumers at the lowest possible cost.

Silver cars appeal to consumers. Silver is typically the one of the most popular colors, if not the most popular color, chosen by new car buyers. As the popularity of silver cars has grown, so has the variety of silver colors offered by automobile manufacturers. Accordingly, a wide array of silver colors, including metallic colors, is presently available. Despite the wide array of silver colors available, additional, economical, attractive silver paints and automobile painting processes by which such silver paints can be applied are desired by automobile manufacturers.

Traditionally, automobile painting processes include preparation of a substrate, e.g., a vehicle body. After the substrate is prepared, the substrate is moved to a paint booth, where a basecoat composition is applied, typically with an automatic applicator, to form a basecoat layer. In the paint booth, a clearcoat composition is also applied, with another automatic applicator, to form a clearcoat layer. The substrate is then moved to an oven, where the substrate is baked to cure the layers and form a multi-layered coating. The automobile painting process described above is a typical automobile painting process.

Painting an automobile a silver color often involves a complicated, expensive silver basecoat composition and automobile painting process. The silver color is the result of application of the silver basecoat composition and the formation of a silver basecoat layer.

To start, the silver basecoat composition is formulated to comprise a binder, i.e., a resin, a crosslinker, additives, a pigment, and solvent. More specifically, the silver basecoat composition typically comprises pigments such as an aluminum flake, in combination with various pigments, such as black and white pigments, which impart the silver color to the silver basecoat layer. Dispersion of the aluminum flake throughout the silver basecoat composition, size and shape of the aluminum flake, rheological properties of the silver basecoat composition, application of the silver basecoat composition, and orientation of the aluminum flake within the silver basecoat layer, impact the optical properties of the silver basecoat layer.

One optical property, light reflection, is particularly useful in the characterization of the silver basecoat layer. An observed change in light reflection is commonly characterized by travel or flop index. Traditionally, a silver basecoat layer having low flop index was desired such that the silver basecoat layer appears uniform when viewed from multiple angles and on curved surfaces. Typically, low flop index in the silver basecoat layer requires that the aluminum flake be oriented randomly within the silver basecoat layer. Recently, a silver basecoat layer having high flop index has become increasingly popular such that the silver basecoat layer appears different when viewed from multiple angles and on curved surfaces, this appearance often being referred to as a "liquid metal" appearance. Typically, high flop index in the silver basecoat layer requires that the aluminum flake be oriented substantially parallel to the substrate within the silver basecoat layer. To form a silver basecoat layer having high flop index, a silver basecoat composition having low solids, i.e., high solvent, is hand applied. Because the liquid basecoat composition having low solids is hand applied, use of the silver basecoat layer having high flop index by automobile manufacturers is limited.

Efforts have been made to formulate economical silver basecoat compositions that can be applied with efficient automobile painting processes to form silver basecoat layers having high flop index (see for example EP 2 158 280 A1 and EP 1 591 492 A1). To date, a silver basecoat layer having high flop index and "liquid metal" appearance has not been achieved with an economical silver basecoat composition and that can be applied with an efficient automobile painting process.

SUMMARY OF THE INVENTION AND ADVANTAGES

The subject invention provides a liquid metal composition. The liquid metal composition includes a binder comprising an acrylic resin and a cellulose acetate butyrate, a wax, an organic solvent, and an aluminum pigment comprising PVD aluminum flake.

The subject invention also provides a multi-layered coating system having a flop index of greater than 10 and including a substrate, a liquid metal layer disposed about the substrate and formed from the liquid metal composition, and a topcoat layer disposed about the liquid metal layer and formed from a topcoat composition.

The subject invention further provides a method of painting the substrate with the liquid metal composition and the topcoat composition to form the multi-layered coating system. The method includes the steps of applying the liquid metal composition having an application percent solids of greater than 10% onto the substrate to form the liquid metal layer, applying the topcoat composition onto the liquid metal layer to form the topcoat layer, and curing the layers to form the multi-layered coating system.

The liquid metal composition of the subject invention can be applied to a substrate to form a liquid metal layer having high flop index and a "liquid metal" appearance, which appeals to consumers. Moreover, the liquid metal composition is economical and can be applied with an efficient automobile painting process.

BRIEF DESCRIPTION OF THE DRAWINGS

Other advantages of the present invention will be readily appreciated, as the same becomes better understood by reference to the following detailed description when considered in connection with the accompanying drawing wherein:

Figure 1 is a flowchart generally illustrating a method of painting a substrate with a liquid metal composition and a topcoat composition to form a multi-layered coating according to the present invention;

Figure 2 is a cross-sectional view of a multi-layered coating system according to the present invention comprising a substrate, a liquid metal layer, and a topcoat layer;

Figure 3 is a flowchart generally illustrating a method of painting a substrate with a basecoat composition, a liquid metal composition, and a topcoat composition to form a multi-layered coating system according to the present invention;

Figure 4 is a cross-sectional view of a multi-layered coating system according to the present invention comprising a substrate, a basecoat layer, a liquid metal layer, and a topcoat layer;

Figure 5 is a flowchart generally illustrating a method of painting a substrate with a basecoat composition, a clearcoat composition, a liquid metal composition, and a topcoat composition to form a multi-layered coating system according to the present invention; and

Figure 6 is a cross-sectional view of a multi-layered coating system according to the present invention comprising a substrate, a basecoat layer, a clearcoat layer, a liquid metal layer, and a topcoat layer.

DETAILED DESCRIPTION OF THE INVENTION

The present invention provides a liquid metal composition, a multi-layered coating system 12, and a method of painting a substrate 10 to form the multi-layered coating system 12, each of which is described in greater detail below. It is to be appreciated that "liquid metal" does not refer to actual liquid metal but rather the "liquid metal" appearance of a liquid metal layer/coating, which is formed from the liquid metal composition. Referring to the Figures, wherein like numerals indicate corresponding parts throughout the several views, the method of painting a substrate 10 to form a multi-layered coating system 12 with the liquid metal composition and a topcoat composition is generally shown at 14. The liquid metal composition, the multi-layered coating system 12, and the method 14 of the present invention are particularly suitable for the automotive coating industry; however, it is to be appreciated that the liquid metal composition, the multi-layered coating system 12, and the method 14 are not limited to the automotive coating industry. For example, the liquid metal composition, the multi-layered coating system 12, and the method 14 may be utilized in the furniture coating industry.

The substrate 10 can comprise any type of material, such as a metal, an alloy, a polymeric material, etc. In addition, the substrate 10 can be pre-treated and/or already having a coating disposed thereon. Typically, the substrate 10 is an automobile body. It is to be appreciated that the automobile body may be any type of automobile body; for example, the automobile body may be a car, a truck, an SUV, a trailer, a bus, etc. In addition, it is to be appreciated that the term "automobile body" also encompasses automobile components, such as bumpers, mirrors, and/or body panels. As set forth above, the automobile body can have a coating disposed thereon. For example, the substrate 10 may be an automobile body having a phosphate layer, an e-coat layer, a primer layer, a basecoat layer, a clearcoat layer, or any combination thereof disposed thereon.

The subject invention provides a liquid metal composition. The liquid metal composition includes a binder comprising an acrylic resin and a cellulose acetate butyrate, a wax, an organic solvent, and an aluminum pigment comprising PVD aluminum flake 18. The liquid metal composition is applied to the substrate 10 to form the liquid metal layer 16.

As is known in the art the binder, also referred to as a resin, includes a wide variety of possible chemistries and functionalities. The binder may include one or more resins and typically includes a combination of resins.

The binder includes an acrylic resin. The binder may include two or more acrylic resins. The acrylic resin typically has hydroxyl functionality. The acrylic resin typically has a number average molecular weight (M) greater than 1,000, more typically from 2,000 to 20,000, and most typically from 3,000 to 15,000, g/mol. Without being bound by theory, it is believed that the acrylic resin having molecular weights in the ranges above optimizes orientation of the aluminum pigment during application of the liquid metal composition and in the liquid metal layer formed therefrom. The acrylic resin is typically included in the liquid metal composition in an amount from 10 to 80, more typically in an amount from 20 to 70, and most typically in an amount from 40 to 60 percent by weight, based on 100 parts by weight of the binder of the liquid metal composition.

The binder may also include a crosslinker such as, but not limited to, a melamine formaldehyde resin. If a melamine formaldehyde resin is included, the melamine formaldehyde resin is typically included to react with the acrylic resin. That is, the melamine formaldehyde resin is included to crosslink or cure the acrylic resin. As such, the melamine formaldehyde resin is typically selected in consideration of the specific acrylic resin selected. In a one embodiment, the melamine formaldehyde is hexamethoxymethyl/n-butyl-melamine formaldehyde having a 55:45 methyl:butyl ratio. The crosslinker is typically present in the liquid metal composition in an amount of from 5 to 60, more typically in an amount of from 10 to 45, and most typically in an amount of from 15 to 35, percent by weight based on 100 percent by weight of the binder of the liquid metal composition.

The binder also includes a cellulose acetate butyrate. The cellulose acetate butyrate is a polymeric ester of cellulose and can be considered a resin. The cellulose acetate butyrate can be added to the liquid metal composition to (1) modify the rheological properties of the liquid metal composition and (2) improve the physical properties, e.g. hardness and UV resistance, of the liquid metal layer formed therefrom. As a rheology modifier, the cellulose acetate butyrate typically functions in conjunction with the wax to facilitate the "wet on wet" application of the liquid metal composition with the topcoat composition, as is discussed in greater detail below.

A viscosity and a number average molecular weight ($M_n$) of the cellulose acetate butyrate impacts the overall rheology as well as the application properties, such as the sprayability, of the liquid metal composition. Typically, the cellulose acetate butyrate has (1) a viscosity from 0.5 to 80, more typically from 1 to 80, and most typically from 74 to 78, poise at 25°C when tested in accordance with ASTM D1343 and (2) and a number average molecular weight ($M_n$) from 5000 to 100,000, more typically from 20,000 to 80,000, and most typically from 65,000 to 75,000, g/mol.

Specific examples of a cellulose acetate butyrate include CAB-381-0.5 and CAB-381-20, both commercially available from Eastman Chemical Company of Kingsport, TN. The cellulose acetate butyrate is typically present in the liquid metal composition in an amount of from 0.1 to 40, more typically in an amount of from 5 to 35, and most typically in an amount of from 10 to 30, percent by weight based on 100 parts by weight of the binder of the liquid metal composition.

The binder may also include an epoxy resin. The epoxy resin can be added to the liquid metal composition to improve the durability, film splitting, and adhesive properties of the liquid metal layer formed therefrom. Typically, the epoxy resin has (1) a viscosity of from 1 to 1000, more typically from 1 to 100, and most typically from 5 to 15, centipoise at 25°C and (2) and an epoxide equivalent weight of from 20,000 to 200,000, more typically from 50,000 to 100,000, and most typically from 90,000 to 100,000. The epoxy resin is typically present in the liquid metal composition in an amount of from 0.1 to 10, more typically in an amount of from 1 to 5, and most typically in an amount of from 1.5 to 4.0, percent by weight based on 100 percent by weight of the binder of the liquid metal composition.

It is to be appreciated that the binder may include any combination of the aforementioned resins as well as other resins and crosslinkers known in the art. The binder is typically present in the liquid metal composition in an amount of from 5 to 60, more typically in an amount from 10 to 50, and most typically in an amount of from 15 to 45 percent by weight, based on 100 percent by weight of the solids in the liquid metal composition. The solids are the solid components in the liquid metal composition, such as the binder, wax, pigments, etc.

The liquid metal composition also comprises a wax. Generally, the wax is a chemical compound that is malleable near ambient temperatures. The wax typically has a melting point greater than 45°C to give a low viscosity liquid. The wax is typically an organic compound, and can be synthetic or naturally occurring. The wax is typically soluble in organic solvents. As such, the wax can be included a wax solution. In one embodiment, the wax solution including a wax comprising ethylene-acrylic acid copolymer in an amount of 6, Aromatic 100 in an amount of 41, and n-butyl acetate in an amount of 53, percent by weight based on 100 percent by weight of the wax solution, is formed to dissolve the wax. The wax solution is added to the liquid metal composition. The wax is typically present in the liquid metal composition in an amount of less than 5, more typically in an amount of less than 1, and most typically in an amount of from 0.1 to 0.3, percent by weight based on 100 percent by weight of the liquid metal composition.

The liquid metal composition also comprises an aluminum pigment. The liquid metal composition can comprise a single aluminum pigment or can comprise a mixture of different aluminum pigments. The aluminum pigment optimizes the optical properties of the multilayer coating to provide high travel and a flop index of greater than 10, i.e., a "liquid metal" appearance.

Typically, the aluminum pigment comprises aluminum flake formed via physical vapor deposition, and known in the art as PVD aluminum flake 18. Physical properties of the PVD aluminum flake 18, including particle shape, size, and distribution, as well as particle thickness and surface characteristics impact the optical properties, such as flop index, of the liquid metal layer 16.

The PVD aluminum flake 18 typically has a particle size distribution having: a D10 value of from 1 to 30, more typically from 2 to 20, and most typically of from 4 to 6, $\mu$m; a D50 value of from 5 to 50, more typically from 10 to 20, and most typically of from 11 to 12, $\mu$m; and a D90 value less than 75, more typically less than 50, and most typically less than 24, $\mu$m. D50 describes the median diameter of the PVD aluminum flakes in a distribution of PVD aluminum flakes. For example, in any given sample of PVD aluminum flakes, 50% of the PVD aluminum flakes have a diameter which is smaller than D50 and the other 50% of the PVD aluminum flakes have a diameter which is larger than D50. D10 describes the diameter of the smallest 10% of PVD aluminum flakes in a distribution of PVD aluminum flakes. For example, in any given sample of PVD aluminum flakes, 10% of the PVD aluminum flakes have a diameter which is smaller than D10 and 90% of the PVD aluminum flakes have a diameter which is greater than D10. D90 describes the diameter of the largest 10% of PVD aluminum flakes in a distribution of PVD aluminum flakes. For example, in any given sample of PVD aluminum flakes, 90% of the PVD aluminum flakes have a diameter which is smaller than D90 and 10% of the PVD aluminum flakes have a diameter which is greater than D90.

The PVD aluminum flake 18 typically has a smooth top and bottom surface relative to that of conventional aluminum flake. Additionally, the PVD aluminum flake 18 typically has a thickness of from 10 to 150 more typically from 25 to 100, and most typically from 30 to 50, nm. The smooth top and bottom surfaces as well as the thickness of the PVD aluminum flake 18 impact light reflection and the "liquid metal" appearance of the liquid metal layer. That is, the liquid metal composition comprising the PVD aluminum flake 18 creates a more "liquid metal" effect because the PVD aluminum flake 18 is smooth, thin, and lays down, so to speak, in a more level orientation relative to the surface of the substrate 10.

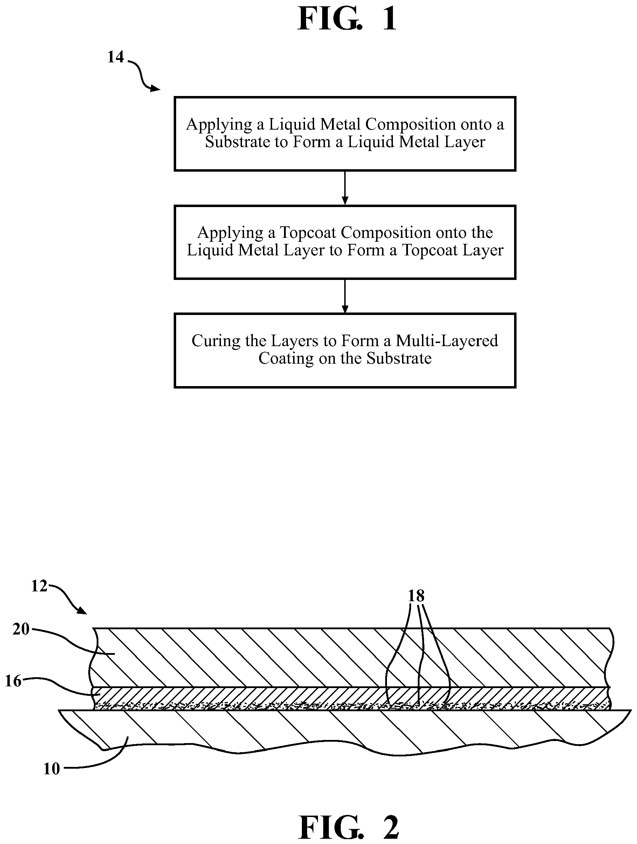

The orientation of the PVD aluminum flake 18 in the liquid metal layer 16 is influenced by the substrate's 10 topography, the formulation of the liquid metal composition, and the application of the liquid metal composition to the substrate 10. However, the physical properties of the PVD aluminum flake 18 also impact the orientation of the PVD aluminum flake 18 in the liquid metal layer 16. Generally, the physical properties of the PVD aluminum flake 18 facilitate an orientation of the PVD aluminum flake 18 which is proximally and substantially parallel to the substrate 10 within the liquid metal layer 16, as shown in Figures 2, 4, and 6. Without being bound by theory it is believed that leafing or non-leafing properties are determined by a flake's ability to "float" and that flakes that float better tend to distribute more evenly over the surface of the layer. Without being bound by theory, it is also believed that the PVD aluminum flake 18 of the liquid metal composition of the present invention exhibits non-leafing behavior. That is although the PVD aluminum flake 18 orients parallel to and evenly distributes across the substrate 10, the PVD aluminum flake 18 tends to orientate proximal to the substrate 10 and not "float" in the liquid metal composition. The non-leafing behavior of the PVD aluminum flake 18 is a result of the thickness and the surface characteristics of the PVD aluminum flake 18 as well as the molecular weight of the acrylic resin. As a result of the non-leafing behavior of the PVD aluminum flake, the liquid metal layer 16 exhibits a flop index of greater than 10 and a "liquid metal" appearance and is durable because the PVD aluminum flake 18 tends to orientate proximal to the substrate 10.

In one embodiment, the aluminum pigment comprises PVD aluminum flake 18 having a particle size distribution having a D10 value from 1 to 30 $\mu$m, a D50 value from 5 to 50 $\mu$m, and a D90 value less than 75 $\mu$m and the PVD aluminum flake 18 is proximal to the substrate 10 and oriented substantially parallel to the substrate 10 within the liquid metal layer 16.

The PVD aluminum flake 18 is typically present in the liquid metal composition in an amount from 0.1 to 5, more typically in an amount from 1 to 2.5, and most typically in an amount of from 1.8 to 2.2, percent by weight, based on 100 parts by weight of the liquid metal composition. When the PVD aluminum flake 18 is present in the liquid metal composition in accordance with the ranges set forth above, the aluminum pigment imparts optimal optical properties, i.e., high travel, high flop index, and a "liquid metal" appearance to the multi-layered coating system 12. However, it should be appreciated that the PVD aluminum flake 18 can be present in the liquid metal composition in an amount of greater than 5 percent by weight based on 100 parts by weight of the liquid metal composition and still impart adequate optical properties, such as flop index and travel, to the liquid metal composition.

It should be understood that the aluminum pigment may include aluminum flake, not manufactured via a physical vaporization process. For example, the aluminum pigment can also comprise conventional milled aluminum flake having irregular edges and surface characteristics and a thickness of about 0.1 $\mu$m, aluminum flake having a lenticular shape and smooth edges and surface characteristics and a thickness of about 0.3 to 0.5 $\mu$m thick, and/or aluminum flake having relatively smooth edges and surface characteristics and a thickness of about 0.8 to 1.2 $\mu$m thick. It should be understood that the aluminum pigment may include some other components not specifically enumerated or described herein and still fall within the scope of the claims.

As described above, the liquid metal composition comprises both the binder and the aluminum pigment. A ratio of aluminum pigment to binder in the liquid metal composition impacts the cost and the properties of the liquid metal layer 16. Since aluminum pigments are typically costly relative to the other components of the liquid metal composition and also provide a liquid metal layer 16 having optimal optical properties, such as flop index and travel, a lower aluminum pigment to binder ratio is typically desirable. The ratio of the aluminum pigment to the binder in the liquid metal composition is typically less than 0.25, more typically less than 0.20, and most typically 0.08 to 0.18.

The liquid metal composition comprises the organic solvent. The organic solvent of the liquid metal composition typically includes a mixture of solvents. One skilled in the art typically selects the solvent component to evaporate readily during formation of the liquid metal layer 16. Suitable solvents include, but are not limited to, glycols, esters, ether-esters, glycol-esters, ether-alcohols, aliphatic hydrocarbons, aromatic hydrocarbons, ketones, and combinations thereof. Specific examples of suitable solvents include, but are not limited to, Aromatic 7100, Aromatic 150, isopropanol, N-butyl acetate, primary amyl acetate, PM acetate, acetone, isopropanol, n-butanol, ethylene glycol monobutyl ether, ethyl acetate, propanol, normal pentyl propanoate, amino methyl propanol, n-methylpyrrolidone, and water.

The liquid metal composition may also comprise a pigment. The pigment is typically included in the liquid metal composition to impart color to the liquid metal coating which is formed from the liquid metal composition. Such pigments are typically known in the art and are selected by one skilled in the art according to desired color, durability, weather resistance, and chemical resistance. Suitable pigments include inorganic metal oxides, organic compounds, metal flake (other than aluminum flake), micas, extender or filler pigments, and corrosion-inhibitive pigments such as chromates, silicas, silicates, phosphates, molybdates, and combinations thereof. If included in the liquid metal composition, the pigment can be included in various amounts.

The liquid metal composition may also comprise the phosphate component such as a phosphate ester. The phosphate component is typically included in the liquid metal composition to improve the adhesion of the liquid metal coating to the substrate 10. A suitable phosphate ester is LUBRIZOL® 2061, LUBRIZOL® 2062, and LUBRIZOL® 2063, all commercially available from Lubrizol Corporation of Wickliffe, OH. If included in the liquid metal composition, the phosphate ester can be included in various amounts.

The liquid metal composition may also comprise an additive component. The additive component may include any suitable additive component or mixtures of additive components known in the art. The additive component typically includes a combination of additive components. Suitable additive components may be selected from the group of catalysts, flattening or matting agents, surfactants, fillers, plasticizers, emulsifiers, texturizers, thickeners, adhesion promoters, stabilizers, defoaming agents, wetting additives, and combinations thereof. Other additive components not specifically recited herein may also be suitable for purposes of the present invention. If included in the liquid metal composition, the additive component can be included in various amounts.

The multi-layered coating system 12 also includes the topcoat composition. The topcoat composition is applied to the liquid metal layer 16 to form the topcoat layer 20. The topcoat composition may be either a liquid or a powder as is well known in the art. The topcoat layer 20 is typically transparent and/or clear and is usually, but not always, the outermost layer of the multi-layered coating system 12 relative to the substrate 10. However, it should be understood that additional layers may be applied to topcoat layer 20.

The multi-layered coating system 12 optionally includes a basecoat composition. The basecoat composition is applied to the substrate 10 to form the basecoat layer 22. The basecoat composition may be either a liquid or a powder as is well known in the art.

The multi-layered coating system 12 optionally includes a clearcoat composition. The clearcoat composition is applied to the substrate 10 to form the clearcoat layer 24. The clearcoat composition may be either a liquid or a powder as is well known in the art.

The substrate 10 is prepared prior to application of the various layers described above. Preparation of the substrate 10 typically includes cleaning the substrate 10 with an iron phosphate wash. After cleaning the substrate 10, an electrocoat (e-coat) is applied to the substrate 10. The e-coat be any type of e-coat known in the art and can comprise a polymer selected from the group of epoxies, acrylics, other polymers known in the art, and combinations thereof. The e-coat is preferably applied by a process known as electrodeposition, in which the substrate 10 is electrically charged and immersed in a bath of the e-coat. The bath of the e-coat includes an opposite electrical charge relative to the substrate 10. The particles in the bath of the e-coat are attracted to the substrate 10, neutralized, and then cured. The preferred method 14 includes making the substrate 10 the cathode, in which the process is called cathodic e-coating as is well known in the art. The e-coat, which is deposited on to the substrate 10, is cured in an oven prior to application of the powder primer, as is well known in the art. After the e-coat is cured, final preparation of the substrate 10 may include sanding the e-coat to reduce the average surface roughness (Ra) of the e-coat.

After application of the e-coat, a primer can be applied onto the substrate 10 to form a primer layer. The primer can be waterborne, solventborne, powder, powder slurry, or any primer known in the art. The primer layer is not cured, and is applied to the e-coat by standard painting techniques as are well known in the art.

The method 14 includes the step of applying a liquid metal composition to the substrate 10 to form the liquid metal layer 16. As with all other components which may be used in the method 14, the liquid metal composition is just as described above with respect to the multi-layered coating system 12.

Typically an intermediate composition is shipped to a manufacturing site and further diluted with solvent at the manufacturing site, for various reasons, to form the liquid metal composition. The percent solids of the liquid metal composition when applied to the substrate 10 is referred to as an application percent solids. The liquid metal composition is typically applied to the substrate 10 at an application percent solids of greater than 10 and more typically at an application percent solids of from 11 to 35, % based on 100 parts by weight of the liquid metal composition to form a liquid metal layer 16.

In one embodiment, the ratio of the aluminum pigment to the binder in the liquid metal composition is less than 0.25 and the liquid metal composition is applied to the substrate 10 at an application percent solids of from 11 to 35, % based on 100 parts by weight of the liquid metal composition to form the liquid metal layer 16. In another embodiment, the ratio of the aluminum pigment to the binder in the liquid metal composition is 0.08 to 0.18 and the liquid metal composition is applied to the substrate 10 at an application percent solids of from 11 to 35, % based on 100 parts by weight of the liquid metal composition to form a liquid metal layer 16.

Once the intermediate composition is appropriately diluted to form the liquid metal composition, the liquid metal composition is applied via spraying onto the substrate 10 by air-atomized or bell-applied spray application with a bell applicator, or any other equivalent processes. When the liquid metal composition is applied to the substrate 10 with the bell applicator, the liquid metal composition is typically applied with a bell speed of from 15,000 to 80,000 rpm, more typically applied with a bell speed of from 50,000 to 65,000 rpm, and most typically applied with a bell speed of from 50,000 to 60,000 rpm. In addition, when the liquid metal composition is applied to the substrate 10 with the bell applicator, the liquid metal composition is typically applied at a flow rate of from 50 to 800 cc/min, more typically applied at a flow rate of from 100 to 500 cc/min, and most typically applied at a flow rate of from 150 to 350 cc/min. The liquid metal composition may then be flashed for some period of time at ambient temperature. The ranges for bell speed and flow rate set forth above may vary depending other processing parameters, for example, in automotive applications flow rate will depend on a number of robots, a line speed, and an area (e.g. $ft^2$) to paint per unit time (e.g. min).

Once applied to the substrate 10, the liquid metal composition can be cured by the application of at least one of heat, infrared radiation, or ultraviolet radiation to form the liquid metal layer 16. When the liquid metal composition is cured via heat, it is typically cured in an oven at a temperature of from 250°F to 350°F for between 10 and 50 minutes metal temperature. Once cured, the liquid metal layer 16 is typically less than 0.7 mil thick, more typically less than 0.5 mil thick, still more typically more than 0.4 mil thick, and most typically from 0.2 to 0.4 mil thick.

The method 14 also includes the step of applying the topcoat composition onto the liquid metal layer 16 to form a topcoat layer 20. The topcoat layer 20 is just as described above with respect to the multi-layered coating system 12. The topcoat composition can be cured by the application of at least one of heat, infrared radiation, or ultraviolet radiation to form the liquid metal layer 16. When the topcoat composition is cured via heat, it is typically cured in an oven at a temperature of from 250 to 350 °F for between 10 and 50 minutes metal temperature.

The topcoat layer 20 can be cured individually or simultaneous with the liquid metal layer 16. Should the topcoat composition be applied to the substrate 10 to form the liquid metal layer 16 and the topcoat composition be applied to the liquid metal layer 16, the step of applying the topcoat composition onto the liquid metal layer 16 can be further defined as applying the topcoat composition wet-on-wet onto the liquid metal layer 16 such that the layers are simultaneously cured. Once the liquid metal layer 16 and the topcoat layer 20 are cured, the collective thickness of the liquid metal layer 16 and the topcoat layer 20 is typically less than 3.5 mil thick, more typically less than 2.6 mil thick, and most typically from 2.0 mil thick to 2.6 mil thick. In various embodiments, the liquid metal layer 16 is less than 0.4 mil thick and the liquid metal layer 16 and said topcoat layer 20 are collectively less than 2.6 mil thick.

In one embodiment, the multi-layered coating system 12 comprises the liquid metal layer 16 and the topcoat layer 20. Figure 1 is a flowchart generally illustrating a method 14 of painting a substrate 10 with a liquid metal composition and a topcoat composition to form a multi-layered coating system 12 and Figure 2 is a cross-sectional view of the multi-layered coating system 12 on the substrate 10 comprising a liquid metal layer 16 and a topcoat layer 20.

The method 14 optionally includes the step of applying a basecoat composition onto the substrate 10 to form a basecoat layer 22 prior to the step of applying the liquid metal composition. The basecoat composition is typically applied to the prepared substrate 10 by standard painting techniques as are well known in the art.

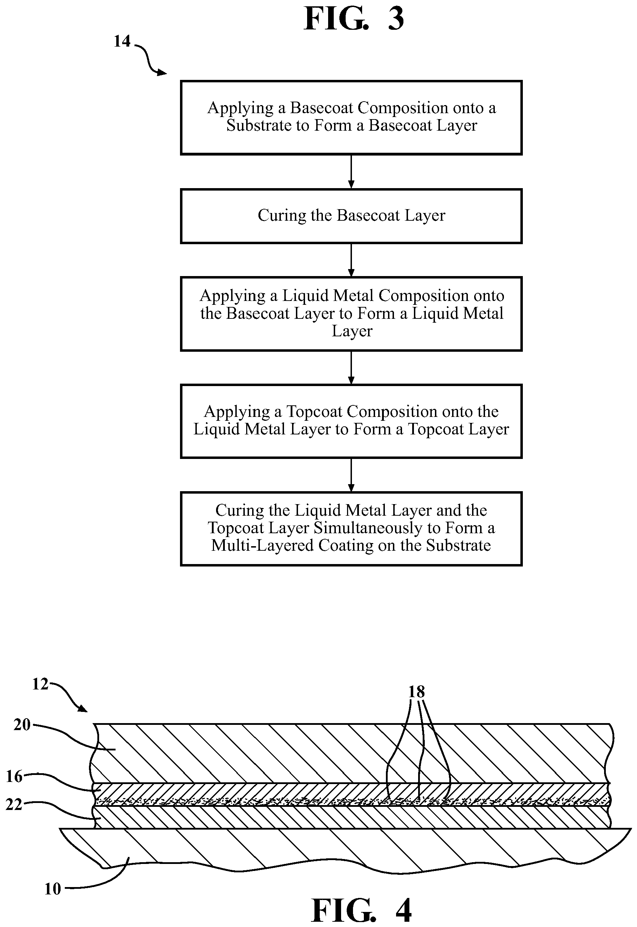

In another embodiment, the multi-layered coating system 12 comprises the basecoat layer 22, the liquid metal layer 16, and the topcoat layer 20. Figure 3 is a flowchart generally illustrating a method 14 of painting a substrate 10 with a basecoat composition, a liquid metal composition, and a topcoat composition to form a multi-layered coating system 12 and Figure 4 is a cross-sectional view of the multi-layered coating system 12 on the substrate 10 comprising a basecoat layer 22, a liquid metal layer 16, and a topcoat layer 20.

The method 14 also optionally includes the step of applying a clearcoat composition onto the prepared substrate 10 or the basecoat layer 22 to form a clearcoat layer 24 prior to the step of applying the liquid metal composition. The clearcoat composition is applied to the substrate 10 by standard painting techniques as are well known in the art.

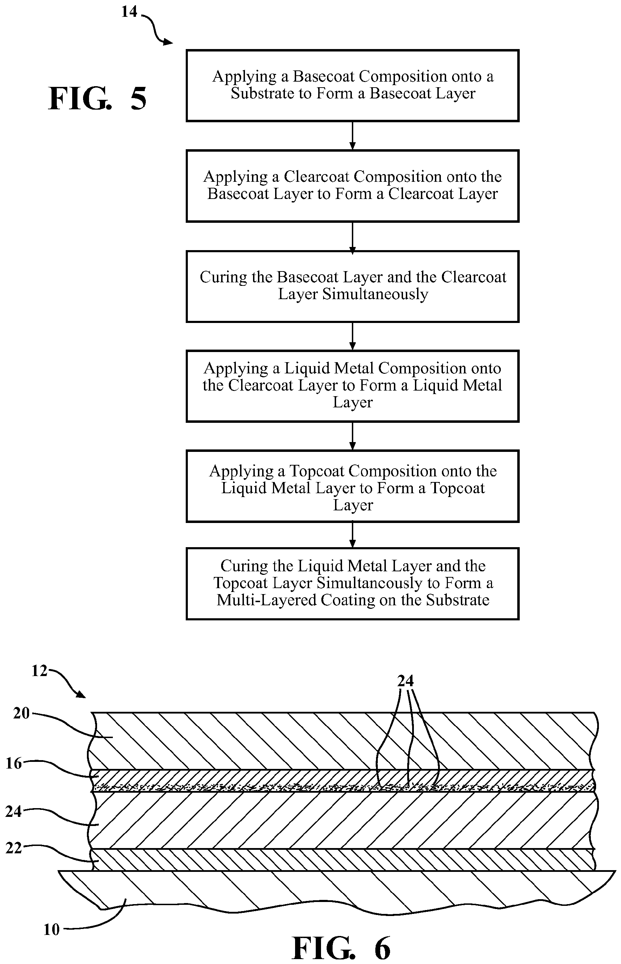

In another embodiment, the multi-layered coating system 12 comprises the basecoat layer 22, the clearcoat layer 24, the liquid metal layer 16, and the topcoat layer 20. Figure 5 is a flowchart generally illustrating a method 14 of painting a substrate 10 with a basecoat composition, a clearcoat composition, a liquid metal composition, and a topcoat composition, to form a multi-layered coating system 12 and Figure 6 is a cross-sectional view of the multi-layered coating system 12 on the substrate 10 according to the present invention comprising a basecoat layer 22, a clearcoat layer 24, a liquid metal layer 16, and a topcoat layer 20.

As described above, the method 14 includes the steps of applying the liquid metal composition and the topcoat composition, and optionally applying the basecoat composition and the clearcoat composition. The compositions set forth immediately above may be applied in any order and in one or more applications. In addition, the compositions set forth above can be cured sequentially, simultaneously in part (i.e., curing layers both sequentially and simultaneously), or simultaneously in whole (i.e., curing all of the layers simultaneously). Furthermore, when the compositions are cured via heat, the compositions may be cured at various temperatures and times and still fall within the scope of the claims.

The method 14 provides the multi-layered coating system 12. The multi-layered coating system 12 comprising the liquid metal layer 16 reflects varying intensities of light with changes in observation angles. The multi-layered coating system 12 has a color defined by an 'L' value, an 'a' value, and a 'b' value, i.e., the article 20 has L*a*b* values. L*a*b* values of the multi-layered coating system 12 can be measured by a spectrophotometer according to a Hunter Lab color scale. The Hunter Lab color scale is a color-measuring system that is well known to those skilled in the color art. The spectrophotometer employed for measuring the L*a*b* values is typically a 45°/0° spectrophotometer, such as those commercially available from X-Rite Incorporated of Grand Rapids, MI, although other types of spectrophotometers can also be used. In the Hunter Lab color scale, the 'L' value is associated with a central vertical axis that represents lightness and darkness, the lightest being 'L' = 100 (white) and the darkest being 'L' = 0 (black). Further, in the Hunter Lab color scale, the 'a' value is associated with a red/green scale and the 'b' scale is associated with a yellow/blue scale. It is to be appreciated that unlike the 'L' value, the 'a' and 'b' values have no numerical limits. A positive a value is red and a negative a value is green. A positive 'b' value is yellow and a negative 'b' value is blue. It is to be appreciated that other color scales can be used to determine the color of the article 20, such as CIELAB color space.

The method 14 provides the multi-layered coating system 12. The multi-layered coating system 12 comprising the liquid metal layer 16 reflects varying intensities of light with changes in observation angles. Generally, the observation angles are grouped into three categories: "Face" (near specular), "Mid-specular" (or diffuse), and "Flop" (far specular). These categories correlate to observation angles on a goniospectrophotometer as follows: near specular is 15 or 25°; mid specular is 45°; and far specular is 75 or 110°. The observation angles are determined by reference to the specular angle which is 45° from normal. Typically, travel is described as the difference in extent to which the "Face" appears bright silver when compared to "Flop" which appears darker grey.

Another expression for observed change in the reflection of light is given by flop index. Flop index is a measurement of the change in reflectance of a coating as it is rotated through the observation angles. A flop index of 0 represents a solid color, while higher flop index of greater than 10 indicates a "liquid metal effect". Flop index is mathematically defined by:

$$\text{Flop Index} = 2.69 \, (L*15 - L*110)^{1.11} / (L*45)^{0.86}$$

The multi-layered coating system 12 of the present invention typically has a flop index of greater 10, more typically greater than 12, and most typically of from 12 to 20.

The following examples are meant to illustrate the invention and are not to be viewed in any way as limiting to the scope of the invention.

EXAMPLES

Example Multi-layered Coatings 1-5 (Formed via a "Wet on Wet" Process)

Liquid metal compositions, corresponding to Example Compositions 1-3, are formed in accordance with the present invention. Example Compositions 1-3 are set forth and exemplified in Table 1. Example Multi-layered Coatings 1-5 are formed from Example Compositions 2 and 3 with a "wet on wet" process also in accordance with the present invention. The amount and the type of each component used to form Example Compositions 1-3 is indicated in Table 1 below, with all values in parts by weight based on 100 parts by weight of the combined weight of the components prior to application unless otherwise indicated.

**Table 1**

| Component | Example Composition 1 | Example Composition 2 | Example Composition 3 |
|---|---|---|---|
| Resin A | 14.58 | 14.12 | 7.57 |
| Resin B | --- | --- | 0.24 |

(continued)

| Component | Example Composition 1 | Example Composition 2 | Example Composition 3 |
|---|---|---|---|
| Resin C | 5.28 | 5.12 | 2.96 |
| CAB A | 1.27 | 1.23 | --- |
| CAB B | --- | --- | 1.06 |
| Wax | 0.28 | 0.28 | 0.16 |
| Additive A | 0.60 | 0.61 | 0.34 |
| Additive B | 0.42 | --- | 0.24 |
| Additive C | --- | 0.43 | --- |
| Aluminum Pigment A | 2.54 | 2.59 | 1.42 |
| Organic Solvent A | 13.84 | 13.50 | 7.26 |
| Organic Solvent B | 5.00 | 5.10 | 2.80 |
| Organic Solvent C | 0.73 | 0.32 | 0.41 |
| Organic Solvent D | 7.52 | 7.40 | 10.95 |
| Organic Solvent E | 25.00 | 25.75 | 51.68 |
| Organic Solvent F | 0.03 | 0.03 | 0.02 |
| Organic Solvent G | 0.51 | --- | --- |
| Organic Solvent H | 0.09 | 0.10 | 0.05 |
| Organic Solvent I | 22.31 | --- | --- |
| Organic Solvent J | --- | --- | 0.07 |
| Organic Solvent K | --- | --- | 0.02 |
| Organic Solvent L | --- | 23.26 | 12.77 |
| Organic Solvent M | --- | 0.15 | --- |
| Total | 100.00 | 100.00 | 100.00 |

Resin A is a high molecular weight acrylic resin.

Resin B is a modified epoxy resin.

Resin C is hexamethoxymethyl/n-butyl-melamine formaldehyde resin.

CAB A is cellulose acetate butyrate having a molecular weight ($M_n$) of 30,000.

CAB B is cellulose acetate butyrate having a molecular weight ($M_n$) of 70,000.

Wax is an ethylene-acrylic acid copolymer.

Additive A is a UV stabilizer comprising 95% by weight benzenepropanoic acid (3-(2H-benzotriazol-2-yl)-5-(1,1-dimethylethyl)-4-hydroxy-, C7-9-branched and linear alkyl esters, and 5% by weight 1-methoxy-2-propyl acetate, based on 100% by weight Additive A.

Additive B is a catalyst comprising amine neutralized dodecylbenzenesulfonic acid (DDBSA.)

Additive C is a catalyst comprising amine neutralized p-Toluenesulfonic acid (p-TSA.)

Aluminum Pigment A is HYDROSHINE® WS-3001, a PVD aluminum flake commercially available from Eckart America Corporation of Louisville, KY.

Organic Solvent A is Aromatic 7100, an aromatic hydrocarbon blend.

Organic Solvent B is Aromatic 150, an aromatic hydrocarbon blend.

Organic Solvent C is isopropanol.

Organic Solvent D is N-butyl acetate.

Organic Solvent E is primary amyl acetate.

Organic Solvent F is PM acetate.

Organic Solvent G is acetone.

Organic Solvent H is water.

Organic Solvent I is isopropanol.

Organic Solvent J is n-butanol.

Organic Solvent K is ethylene glycol monobutyl ether.

Organic Solvent L is ethyl acetate.

Organic Solvent M is propanol.

The properties of Example Compositions 1-3 are set forth in Table 2 below.

Table 2

| Property | Example Composition 1 | Example Composition 2 | Example Composition 3 |
|---|---|---|---|
| Application Solids (weight %) | 25.0 | 24.4 | 14.0 |
| Al. Pigment/Binder Ratio* | 0.1 | 0.1 | 0.1 |
| Specific Gravity | 0.91 | 0.95 | 0.92 |
| Weight/Gallon | 7.6 | 7.9 | 7.6 |
| * Calculated by dividing the parts by weight Aluminum Pigment by the sum of the parts by weight the Resin, Crosslinker, and CAB. | | | |

To form Multi-Layered Coatings 1-3, Example Composition 2 is applied to three substrates, each substrate comprising metal and having CATHOGUARD® 500 e-coat and a different primer (as is specified below) applied thereon. Example Composition 2 is spray applied in two coats and a topcoat composition UREGLOSS® is also spray applied "wet on wet" to each substrate with an electrostatic bell-type applicator in an automated process consistent with the methods typically employed by automobile manufacturers. After application of a first coat of Example Composition 2, the first coat is flashed for one minute at ambient temperatures prior to application of a second coat of Example Composition 2. Once the second coat of Example Composition 2 is applied, the second coat is flashed for one minute at ambient temperatures prior to application of the topcoat composition. Example Composition 2 is applied in two coats to the substrate at a total target thickness of 0.3 mil and the topcoat composition is applied in a single coat at a target thickness of 2.0 mil, and the substrates having the compositions thereon are baked for 20 minutes at a metal temperature of 285°F and cure to form Example Multi-Layered Coatings 1-3.

Color data for Example Multi-layered Coatings 1-3 is provided in Table 3 below. Example Multi-layered Coatings 1-3 are analyzed on an X-Rite spectrophotometer in the CIE L*a*b* color scale. Table 3 includes L*, a*, b*, C*, and h* values for Example Multi-layered Coatings 1-3. Further, Table 3 also includes (1) L* value travel (L*15° - L*110°) and (2) the flop index (2.69 (L*15 - E*110/$^{1.11}$/ (L*45)$^{0.86}$) of Example Multi-layered Coatings 1-3. Regarding the L* value travel, typically the higher the value the better, i.e., the higher the L* value at 15° and the lower the L* value at 110°, the more pronounced the "liquid metal" appearance. Regarding the flop index, typically the higher the flop index value the better, i.e., the higher the flop index value, the more pronounced the "liquid metal" appearance.

**Table 3**

| | Angle | L* | a* | b* | C* | h* | L* Value Travel | Flop Index |
|---|---|---|---|---|---|---|---|---|
| Example MLC 1 U28AW110 Silver Primer | 15° | 123.43 | -0.50 | 1.11 | 1.22 | 114.22 | 102.06 | 11.83 |
| | 25° | 100.48 | -0.93 | 1.17 | 1.49 | 128.36 | | |
| | 45° | 58.78 | -0.52 | 0.12 | 0.54 | 166.31 | | |
| | 75° | 30.54 | -0.50 | -0.57 | 0.76 | 228.27 | | |
| | 110° | 21.37 | -0.65 | -0.76 | 1.00 | 229.46 | | |
| Example MLC 2 U28AW032A Titanium Primer Control | 15° | 116.05 | -0.45 | 1.26 | 1.34 | 109.75 | 92.51 | 11.44 |
| | 25° | 97.94 | -0.88 | 1.29 | 1.56 | 124.42 | | |
| | 45° | 61.86 | -0.58 | 0.28 | 0.64 | 154.52 | | |
| | 75° | 33.88 | -0.55 | -0.51 | 0.75 | 223.04 | | |
| | 110° | 23.54 | -0.67 | -0.71 | 0.98 | 226.93 | | |

(continued)

|  | Angle | L* | a* | b* | C* | h* | L* Value Travel | Flop Index |
|---|---|---|---|---|---|---|---|---|
| Example MLC 3 U28KW019 Black Primer Control | 15° | 122.82 | -0.50 | 1.15 | 1.25 | 113.71 | 101.24 | 11.78 |
|  | 25° | 100.60 | -0.95 | 1.23 | 1.56 | 127.78 |  |  |
|  | 45° | 59.34 | -0.55 | 0.17 | 0.57 | 163.02 |  |  |
|  | 75° | 31.00 | -0.51 | -0.56 | 0.76 | 227.71 |  |  |
|  | 110° | 21.58 | -0.63 | -0.79 | 1.01 | 231.39 |  |  |

Referring now to Table 3, Example Multi-layered Coatings 1-3 exhibit excellent L* value travel and flop index when formed (1) with an electrostatic bell-type applicator in an automated "wet on wet" process consistent with the methods typically employed by automobile manufacturers and (2) on a variety of different primers typically used by automobile manufacturers.

To form Example Multi-Layered Coatings 4 and 5, Example Composition 3 is applied with two different spray rates onto a metal panel having CATHOGUARD® 500 e-coat and UNIBLOC® black primer applied thereon. Example Composition 3 is spray applied in two coats and UREGLOSS® topcoat composition is applied "wet on wet" onto each substrate with an electrostatic bell-type applicator in an automated process consistent with the methods typically employed by automobile manufacturers. Example Composition 3 is applied in two coats to the substrate at a total target thickness of 0.3 mil, a topcoat composition is applied at a target thickness of 2.0 mil, and the compositions are baked for 20 minutes at a metal temperature of 285°F and cure to form Example Multi-Layered Coatings 4 and 5. However, Example Composition 3 is spray applied to the substrate in two coats at 190 and 130 cc/min and cured to form Multi-layered Coating 4 whereas Example Composition 3 is spray applied to the substrate in two coats at 220 and 150 cc/min and cured to form Multi-layered Coating 5.

Example Multi-layered Coatings 4 and 5 are analyzed on an X-Rite spectrophotometer in the CIE L*a*b* color scale and color data is provided in Table 4 below. More specifically, Table 4 includes L*, a*, b*, C*, h*, L* value travel, and flop index values for Example Multi-layered Coatings 4 and 5.

**Table 4**

|  | Angle | L* | a* | b* | C* | h* | L* Value Travel | Flop Index |
|---|---|---|---|---|---|---|---|---|
| Example MLC 4 | 15° | 129.98 | -0.48 | -0.22 | 0.53 | 204.31 | 107.64 | 12.51 |
|  | 25° | 100.81 | -1.07 | -0.01 | 1.08 | 185.86 |  |  |
|  | 45° | 56.47 | -0.57 | -0.57 | 0.81 | 224.90 |  |  |
|  | 75° | 30.60 | -0.48 | -0.80 | 0.93 | 238.69 |  |  |
|  | 110° | 22.34 | -0.56 | -0.84 | 1.01 | 235.98 |  |  |
| Example MLC 5 | 15° | 130.57 | -0.43 | -0.03 | 0.51 | 212.35 | 108.56 | 12.53 |
|  | 25° | 101.22 | -1.05 | -0.18 | 1.06 | 189.86 |  |  |
|  | 45° | 56.51 | -0.56 | -0.56 | 0.79 | 224.80 |  |  |
|  | 75° | 30.33 | -0.46 | -0.80 | 0.92 | 240.46 |  |  |
|  | 110° | 22.01 | -0.57 | -0.79 | 0.98 | 234.09 |  |  |

Referring now to Table 4, Example Multi-layered Coatings 4 and 5 exhibit similar, excellent L* value travel and flop index when formed with different application processes, i.e., when Example Composition 3 is applied at different rates to from Coatings 4 and 5. That is, Example Composition 3 is not "process sensitive" such that minor variations in the application process impact the properties of the Example Multi-layered Coatings formed therefrom.

Example Multi-layered Coatings 6-24 (Formed via a "Bake on Bake" Process)

Liquid metal compositions, corresponding to Example Compositions 4-12, are formed in accordance with the present invention. Example Compositions 4-12 are set forth and exemplified in Tables 5 and 6. Example Multi-layered Coatings 6-24 are formed from Example Compositions 4-12 in a "bake on bake" process also in accordance with the present invention. The amount and the type of each component used to form Example Compositions 4-12 is indicated in Tables 5 and 6 below, with all values in grams.

**Table 5**

|  | Ex. Comp. 4 | Ex. Comp. 5 | Ex. Comp. 6 | Ex. Comp. 7 | Ex. Comp. 8 |
|---|---|---|---|---|---|
| Resin D | --- | 225.81 | --- | 225.81 | --- |
| Resin C | 132.58 | 114.9 | 132.58 | 114.9 | 132.58 |
| Organic Solvent N | --- | 1.5 | --- | 1.5 | --- |
| Additive D | 0.70 | 0.70 | 0.70 | 0.70 | 0.70 |
| Additive E | 0.70 | 0.70 | 0.70 | 0.70 | 0.70 |
| Additive B | 28.00 | 28.00 | 28.00 | 28.00 | 28.00 |
| Resin A | 563.18 | 467.73 | 563.18 | 467.73 | 536.18 |
| CAB C | 875.00 | 875.00 | 875.00 | 875.00 | 875.00 |
| Aluminum Pigment B | 420.00 | 420.00 | --- | --- | --- |
| Aluminum Pigment C | --- | --- | 168.00 | 168 | --- |
| Aluminum Pigment D | --- | --- | --- | --- | 140.00 |
| Resin A | 152.73 | 152.73 | 152.73 | 152.73 | 152.73 |
| Organic Solvent D | 1165.0 | 1301.0 | 1556.0 | 1301.0 | 1296.0 |
| Organic Solvent B | 40.00 | 40.00 | 40.00 | 40.00 | 40.00 |
| Total | 3377.9 | 3628.1 | 3516.9 | 3376.1 | 3228.9 |

**Table 6**

|  | Ex. Comp. 9 | Ex. Comp. 10 | Ex. Comp. 11 | Ex. Comp. 12 |
|---|---|---|---|---|
| Resin D | 225.81 | 96.77 | 96.77 | 96.77 |
| Resin C | 114.9 | 49.24 | 49.24 | 49.24 |
| Organic Solvent N | 1.5 | 0.70 | 0.70 | 0.70 |
| Additive D | 0.70 | 0.30 | 0.30 | 0.30 |
| Additive E | 0.70 | 0.30 | 0.30 | 0.30 |
| Additive B | 28.00 | 12.00 | 12.00 | 12.00 |
| Resin A | 467.73 | 200.45 | 200.45 | 200.45 |
| CAB C | 875.00 | 375.00 | 375.00 | 375.00 |
| Aluminum Pigment B | --- | 180.00 | 90.00 | 270.00 |
| Aluminum Pigment D | 140.00 | --- | --- | --- |
| Resin A | 152.73 | 65.45 | 65.45 | 65.45 |
| Organic Solvent D | 1438.0 | 300.0 | 300.0 | 300.0 |
| Organic Solvent B | 40.00 | 360.0 | 320.0 | 400.0 |
| Total | 3485.1 | 1640.2 | 1510.2 | 1770.2 |

Resin D is microgel resin.
Additive D is a solution of polyhydroxycarboxylic acid amides.

Additive E is an acrylic flow agent.

Aluminum Pigment B is METALURE® L-56161, commercially available from Eckart America Corporation of Louisville, KY.

Aluminum Pigment C is SILVERSHINE® S2100, a PVD aluminum flake commercially available from Eckart America Corporation of Louisville, KY.

Aluminum Pigment D is STAPA® HYDROLAN 2156, a PVD aluminum flake commercially available from Eckart America Corporation of Louisville, KY.

CAB C is a solution comprising 20 parts by weight cellulose acetate butyrate having a molecular weight (Mn) of 30,000 and 80 parts by weight n-butyl acetate, based on 100 parts by weight CAB C.

Organic Solvent N is n-methylpyrrolidone.

Properties of Example Compositions 4-12 are set forth in Table 7 below.

**Table 7**

| Example Composition No. | Percent Solids (weight %) | Pigment/Binder Ratio* |
|---|---|---|
| 4 | 23.49 | 0.12 |
| 5 | 23.33 | 0.12 |
| 6 | 22.55 | 0.12 |
| 7 | 25.22 | 0.12 |
| 8 | 24.59 | 0.12 |
| 9 | 24.36 | 0.12 |
| 10 | 28.41 | 0.12 |
| 11 | 30.75 | 0.06 |
| 12 | 26.4 | 0.18 |

To form Multi-layered Coating Nos. 6-24, Liquid Metal Compositions 4-12 are applied onto a prepared substrate in accordance with the parameters set forth in Tables 8 and 9 below.

**Table 8**

| Multi-layered Coating No. | Example Composition No. | Processing Notes | Application Percent Solids at 17-18" FD #4 |
|---|---|---|---|
| 6 | 4 | LM Automated Process | 19.84 |
| 7 | 5 | LM Automated Process | 19.66 |
| 8 | 6 | LM Automated Process | 21.10 |
| 9 | 4 | LM over black BC/TC Automated Process | 14.12 |
| 10 | 7 | LM Handspray Process | 18.29 |
| 11 | 8 | LM Handspray Process | 18.50 |
| 12 | 9 | LM Handspray Process | 18.39 |
| 13 | 9 | BC/CC/LM/TC Automated Process | 18.39 |
| 14 | 9 | LM/TC Automated Process | 18.39 |
| 15 | 9 | BC/CC/LM/TC Handspray Process | 18.39 |
| 16 | 9 | LM/TC Handspray Process | 18.39 |
| Film Build Targets: Primer - 1 mil; Liquid Metal - 0.3 mil; Topcoat - 2.0 mil | | | |

**Table 9**

| Parameter | --- | Basecoat Composition | Liquid Metal Composition | Topcoat Composition | Topcoat Composition |
|---|---|---|---|---|---|
| Booth Temp (OF) | 75 | --- | --- | --- | --- |
| Relative Humidity (PCT) | 60 | --- | --- | --- | --- |
| Equipment Type | --- | Behr Ecobell | Behr Ecobell | Behr Ecobell | Behr Ecobell |
| Bell Cup Type | --- | 048 65 mm Smooth M | 048 65 mm Smooth M | 033 55mm Serrated | 033 55mm Serrated |
| Line Speed (ft/min) | --- | 26.0 | 26.0 | 26.0 | 26.0 |
| Gun-Target Distance (in) | --- | 12 | 12 | 12 | 12 |
| Bell Speed Loaded (rpm) | --- | 55000 | 55000 | 50000 | 50000 |
| Flow Rate | --- | 250 | 165 | 340 | 340 |
| Shaping Air Pressure (SLPM) | --- | 200 | 144 | 150 | 150 |
| Voltage | --- | 70 | 70 | 80 | 80 |
| Film Build (mil) | --- | 0 | 0 | 1 | 1 |
| Flash Time (min) | --- | 1 | 5 | 1 | 10 |
| First Bake Time (min) | --- | --- | --- | --- | 20 |
| First Bake Metal Temp (°F) | --- | --- | --- | --- | 285 |
| Second Bake Time (min) | --- | --- | --- | --- | 20 |
| Second Bake Metal Temp (OF) | --- | --- | --- | --- | 285 |

Example Multi-layered Coating Nos. 6-16 are tested and the results are set forth in Table 10 below. The flop index of the Examples is determined as described above and liquid metal appearance is based on a visual examination the coating by one skilled in the art.

The chip resistance of the Examples is conducted on a gravelometer with 3 pints of cold (-20°C) gravel at a pressure of 70 psi. The chip resistance values indicate the percent paint loss for each Example. Generally, a chip resistance of less than 3% is considered good performance.

QCT adhesion testing is conducted after the Examples are aged for 4 days at 110°F with condensing humidity in a Cleveland Condensing Tester from Q-Panel. A chip resistance rating scale of 1-10 is used to indicate the percent paint loss for each example. A value of 0 indicates no coating loss; a value of 1 indicates a coating loss of less than 5 percent; a value of 2 indicates a coating loss of approximately 5 percent; a value of 3 indicates a coating loss of approximately 10 percent; a value of 4 indicates a coating loss of approximately 15 percent; a value of 5 indicates a coating loss of approximately 20 percent; a value of 6 indicates a coating loss of approximately 25 percent; a value of 7 indicates a coating loss of approximately 45 percent; a value of 8 indicates a coating loss of approximately 60 percent; a value of 9 indicates a coating loss of approximately 75 percent; and a value of 10 indicates a coating loss of approximately 95 percent. Generally, QCT adhesion rating of 3 or lower is considered good performance.

**Table 10**

| Example Multi-layered Coating No. | Flop Index | Liquid Metal Appearance | Chip Resistance | QCT Adh. |
|---|---|---|---|---|
| 6 | 9.8 | Poor | 2.18 | >3 |

(continued)

| Example Multi-layered Coating No. | Flop Index | Liquid Metal Appearance | Chip Resistance | QCT Adh. |
|---|---|---|---|---|
| 7 | 13.4 | Poor | 2.42 | >3 |
| 8 | 12.9 | Poor | 1.84 | >3 |
| 9 | 11.6 | Good | 2.30 | >3 |
| 10 | 16.7 | Very Good | 1.21 | >3 |
| 11 | 16.3 | Very Good | 1.81 | >3 |
| 12 | 16.2 | Very Good | 0.88 | >3 |
| 13 | 13.2 | Good | 2.92 | 1 |
| 14 | 12.9 | Good | 1.91 | 1 |
| 15 | 16.9 | Very Good | 2.92 | 1 |
| 16 | 16.8 | Very Good | 1.91 | 1 |

Example Multi-layered Coating Nos. 17-24 are formed with Example Compositions 4-9 according to the present invention with various application techniques set forth in table 11 below. To form Multi-layered Coating Nos. 17-24, Liquid Metal Compositions 4-12 are applied onto a prepared substrate in accordance with the parameters set forth in Table 9 above. Flop index, determined as described above, of Example Multi-layered Coating Nos. 17-24 is also set forth in Table 11 below.

**Table 11**

| Example Multi-layered Coating No. | 15L | 25L | 45L | 75L | 110L | L25-L75 | MFD | L15-L110 | Flop Index |
|---|---|---|---|---|---|---|---|---|---|
| **Comparative Examples 1 and 2 (Hand Spray Application)** | | | | | | | | | |
| Comp. Ex. 1 | 114.7 | 97.5 | 66.6 | 45.9 | 38.5 | 51.6 | 56.2 | 76.1 | 8.9 |
| Comp. Ex. 2 | 135.4 | 104.7 | 60.7 | 38.7 | 33.4 | 66.0 | 85.1 | 102.0 | 13.4 |
| **Examples 17-22 (Bell/Bell Application)** | | | | | | | | | |
| 17 Ex. Comp. 4 | 119.9 | 101.2 | 68.4 | 44.3 | 35.5 | 56.9 | 64.1 | 84.4 | 9.8 |
| 18 Ex. Comp. 5 | 119.0 | 101.4 | 69.0 | 44.7 | 35.6 | 56.7 | 63.5 | 83.5 | 9.6 |
| 19 Ex. Comp. 6 | 137.2 | 111.9 | 64.9 | 35.5 | 29.3 | 76.4 | 107.7 | 108.0 | 13.4 |
| 20 Ex. Comp. 7 | 137.7 | 112.9 | 65.7 | 35.8 | 29.4 | 77.1 | 107.8 | 108.3 | 13.3 |
| 21 Ex. Comp. 8 | 127.8 | 101.5 | 59.7 | 36.5 | 29.9 | 64.9 | 88.9 | 97.9 | 12.9 |
| 22 Ex. Comp. 9 | 129.4 | 102.7 | 59.9 | 36.0 | 29.5 | 66.7 | 92.8 | 100.0 | 13.2 |
| **Examples 23 and 24 (Hand Spray Application)** | | | | | | | | | |
| 23 Ex. Comp. 6 (6632774-3A) | 144.1 | 112.4 | 60.5 | 33.65 | 28.12 | 78.8 | 117.0 | 116.0 | 15.4 |
| 24 Ex. Comp. 7 (6632774-3B) | 153.5 | 117.2 | 59.06 | 29.83 | 25.88 | 87.4 | 146.5 | 127.6 | 17.5 |

Liquid metal compositions, corresponding to Example Compositions 13-23, are formed in accordance with the present invention. Example Compositions 13-23, are set forth and exemplified in Tables 12 and 13. Example Multi-layered Coatings 25-35 A-C are formed from Example Compositions 13-23 with a "bake on bake" process also in accordance with the present invention. The amount and the type of each component used to form Example Compositions 13-23 is indicated in Tables 12 and 13 below, with all values in grams.

Table 12

|  | Ex. Comp. 13 | Ex. Comp. 14 | Ex. Comp. 15 | Ex. Comp. 16 | Ex. Comp. 17 |
|---|---|---|---|---|---|
| Resin C | 95.96 | 95.96 | 95.96 | 95.96 | 95.96 |
| Additive D | 0.40 | 0.40 | 0.40 | 0.40 | 0.40 |
| Additive E | 0.40 | 0.40 | 0.40 | 0.40 | 0.40 |
| Additive B | 16.00 | 16.00 | 16.00 | 16.00 | 16.00 |
| Resin E | 316.00 | --- | --- | --- | --- |
| Resin A | --- | 430.91 | --- | --- | --- |
| Resin F | --- | --- | 423.21 | --- | --- |
| Resin G | --- | --- | --- | 446.41 | --- |
| Resin H | --- | --- | --- | --- | 422.91 |
| CAB C | 100.00 | 100.00 | 100.00 | 100.00 | 100.00 |
| Aluminum Pigment C | 96.00 | 96.00 | 96.00 | 96.00 | 96.00 |
| Resin E | 64.00 | --- | --- | --- | --- |
| Resin A | --- | 87.27 | --- | --- | --- |
| Resin F | --- | --- | 85.71 | --- | --- |
| Resin G | --- | --- | --- | 90.41 | --- |
| Resin H | --- | --- | --- | --- | 85.65 |
| Organic Solvent D | 440.00 | 600.00 | 650.00 | 922.00 | 770.00 |
| Total | 1128.76 | 1426.94 | 1467.69 | 1767.58 | 1578.32 |

Table 13

|  | Ex. Comp. 18 | Ex. Comp. 19 | Ex. Comp. 20 | Ex. Comp. 21 | Ex. Comp. 22 | Ex. Comp. 23 |
|---|---|---|---|---|---|---|
| Resin C | 75.76 | 75.76 | 75.76 | 75.76 | 75.76 | 95.96 |
| Additive D | 0.40 | 0.40 | 0.40 | 0.40 | 0.40 | 0.40 |
| Additive E | 0.40 | 0.40 | 0.40 | 0.40 | 0.40 | 0.40 |
| Additive B | 16.00 | 16.00 | 16.00 | 16.00 | 16.00 | 16.00 |
| Resin E | 236.00 | --- | --- | --- | --- | 316.00 |
| Resin A | --- | 321.82 | --- | --- | --- | --- |
| Resin F | --- | --- | 316.07 | --- | --- | --- |
| Resin G | --- | --- | --- | 333.40 | --- | --- |
| Resin H | --- | --- | --- | --- | 315.85 | --- |
| CAB C | 500.00 | 500.00 | 500.00 | 500.00 | 500.00 | 100.00 |
| Aluminum Pigment C | 96.00 | 96.00 | 96.00 | 96.00 | 96.00 | 80.00 |
| Resin E | 64.00 | --- | --- | --- | --- | 64.00 |
| Resin A | --- | 87.27 | --- | --- | --- | --- |
| Resin F | --- | --- | 85.71 | --- | --- | --- |
| Resin G | --- | --- | --- | 90.41 | --- | 353.00 |
| Resin H | --- | --- | --- | --- | 85.65 | --- |
| Organic Solvent D | 615.00 | 813.20 | 1665.00 | 1049.00 | 1045.00 | 353.00 |

(continued)

|  | Ex. Comp. 18 | Ex. Comp. 19 | Ex. Comp. 20 | Ex. Comp. 21 | Ex. Comp. 22 | Ex. Comp. 23 |
|---|---|---|---|---|---|---|
| Total | 1603.56 | 1910.85 | 2755.34 | 2161.37 | 2135.06 | 1025.76 |

Resin E is 75% hydroxyl functional acrylic resin in aromatic 100 solvent having a viscosity of 17.5 dPa.s. and a molecular weight ($M_n$) of 2800 g/mol.

Resin F is 55% hydroxyl functional acrylic resin in aromatic 100 solvent having a viscosity of 27 dPa.s. and a molecular weight ($M_n$) of 19,243 g/mol.

Resin G is 53% hydroxyl functional acrylic resin in aromatic 100 solvent having a viscosity of 50 dPa.s. and a molecular weight ($M_n$) of 28,700 g/mol.

Resin H is 56% hydroxyl functional acrylic resin in aromatic 100 solvent having a viscosity of 150 dPa.s. and a molecular weight (M) of 25,000 g/mol.

Three embodiments of example multi-layered coatings, formed from Example Compositions 13-23, are described in Table 13: (1) multi-layered coatings comprising the liquid metal layer and the topcoat layer, (2) multi-layered coatings comprising the basecoat layer, the liquid metal layer, and the topcoat layer, and (3) multi-layered coatings comprising the basecoat layer, a clearcoat layer, the liquid metal layer, and a second topcoat layer. The coatings formed from Example Compositions 13-23 are tested for chip resistance as is described above. The results of the chip resistance testing are set forth in Table 14 below.

**Table 14**

| Refer to Table 9 for the processing parameters. Film Build Targets: Primer - 1 mil Basecoat Layer - 2.0 mil Liquid Meal Layer - 0.3 mil Topcoat Layer - 2.0 mil | | Multi-layered Coating | | |
|---|---|---|---|---|
|  |  | Embodiment 1: E-coat Primer Liquid Metal Layer Top Coat Layer | Embodiment 2: E-coat Primer Basecoat Layer Liquid Meal Layer Topcoat Layer | Embodiment 3: E-coat Primer Basecoat Layer Clearcoat Layer Liquid Metal Layer Topcoat Layer |
| Example Multi-layered Coating No. | Spray Viscosity 17" FD4 | Chip | Chip | Chip |
| 25A-C (Example Comp. 13) | 37.8 | 2.41 | 3.41 | 1.27 |
| 26A-C (Example Comp. 14) | 29.66 | 2.38 | 3.08 | 0.85 |
| 27A-C (Example Comp. 15) | 28.82 | 1.81 | 3.38 | 1.28 |
| 28A-C (Example Comp. 16) | 24.88 | 2.72 | 3.43 | 1.26 |
| 29A-C (Example Comp. 17) | 26.37 | 3.04 | 3.31 | 1.46 |
| 30A-C (Example Comp. 18) | 26.13 | 3.14 | 3.48 | 1.58 |
| 31A-C (Example Comp. 19) | 21.01 | 3.3 | 3.4 | 1.71 |

(continued)

| Refer to Table 9 for the processing parameters. Film Build Targets: Primer - 1 mil Basecoat Layer - 2.0 mil Liquid Meal Layer - 0.3 mil Topcoat Layer - 2.0 mil | | Multi-layered Coating | | |
|---|---|---|---|---|
| | | Embodiment 1: E-coat Primer Liquid Metal Layer Top Coat Layer | Embodiment 2: E-coat Primer Basecoat Layer Liquid Meal Layer Topcoat Layer | Embodiment 3: E-coat Primer Basecoat Layer Clearcoat Layer Liquid Metal Layer Topcoat Layer |
| 32A-C (Example Comp. 20) | 21.87 | 3.56 | 4.62 | 2.0 |
| 33A-C (Example Comp. 21) | 19.97 | 5.09 | 3.37 | 1.55 |
| 34A-C (Example Comp. 22) | 20.07 | 3.72 | 4.1 | 2.4 |
| 35A-C (Example Comp. 23) | 40.75 | 3.71 | 3.29 | 2.16 |

Example Multi-layered Coatings 25A-C-35A-C are formed with various binders and an aluminum pigment at a pigment to binder ratio of 0.12. Example Compositions 13-23 are spray applied at a target thickness of 0.3 mil, but still form a durable liquid metal layer, which is not as thick as traditional basecoat layers.

Referring now to Table 14, the lower the value for chip resistance, the more durable the coating. The multi-layered coatings of Embodiment 1, comprising the liquid metal layer and the topcoat layer have chip resistance values which are generally lower than the multi-layered coatings of Embodiment 2. In particular, the multi-layered coatings of Embodiment 1, demonstrate excellent chip resistance having chip resistance values of less than 3.

Example Composition 24 is formed in accordance with the present invention and set forth in and exemplified in Table 15 below. The amount and the type of each component used to form Example Composition 24 is indicated in Table 15 below, with all values in parts by weight, based on 100 parts by weight composition.

**Table 15**

| | Example Composition 24 |
|---|---|
| Resin D | 6.38 |
| Organic Solvent N | 0.41 |
| Organic Solvent O | 0.20 |
| Organic Solvent D | 1.12 |
| Organic Solvent P | 0.11 |
| Resin E | 3.25 |
| Additive D | 0.02 |
| Additive E | 0.02 |
| Additive A | 0.20 |
| Resin A | 13.21 |
| CAB C | 19.77 |
| Resin I | 0.98 |
| Additive B | 0.79 |

(continued)

|  | Example Composition 24 |
|---|---|
| Resin F | 3.15 |
| Aluminum Pigment B | 17.79 |
| Additive F | 1.00 |
| Organic Solvent C | 0.00 |
| Organic Solvent B | 19.77 |
| Organic Solvent D | 11.84 |
| Total | 100.00 |

Additive F is LUBRIZOL® 2062, a phosphate ester adhesion promoter commercially available from Lubrizol Corporation of Wickliffe, OH.

Organic Solvent O is normal pentyl propanoate.

Organic Solvent P is amino methyl propanol.

Resin I is K-flex XM-A30, a polyester resin commercially available from King Industries, Inc. of Norwalk, CT.

The properties of Example Composition 24 are set forth in Table 16 below.

**Table 16**

| Property | Example Composition 24 |
|---|---|
| Application Solids (weight %) | 20.4 |
| Al. Pigment/Binder Ratio* | 0.09 |
| Viscosity (Ford #4 @ 27°C) | 17 |
| Weight/Gallon (Lbs./gal.) | 7.78 |
| Density (g./ml.) | 0.940 |
| Weight Non-Volatile (weight percent) | 20.40 |
| VOC (Lbs./gal.) | 6.19 |
| Resistivity (mega ohms) | 0.05 |
| * Calculated by dividing the parts by weight Aluminum Pigment by the sum of the parts by weight the Resin, Crosslinker, and CAB. | |

Referring now to Table 17, Example Composition 24 is spray applied to a metal substrate having CATHOGUARD® 500 e-coat and UNIBLOC® titanium primer applied thereon. More specifically, Example Composition 24 is applied at a thickness of 0.3 mil and the substrates having Example Composition 24 applied thereon is heated for 20 minutes at a metal temperature of 285°F and cures to form a "liquid metal layer". A UREGLOSS® topcoat composition is spray applied at a thickness of 2.0 mil, and substrates having the topcoat composition thereon are heated for 20 minutes at a metal temperature of 285°F and cure to form Example Multi-layered Coatings 36-39. Example Multi-layered Coatings 36-39 are tested for chip resistance as well as adhesion to the substrate and the results are set forth in Table 17 below. Please refer to Table 9 for the processing parameters.

**Table 17**

| Example MLC | Liquid Metal Composition / Application Thickness | Topcoat Composition / Application Thickness | Application Method | Chip Rating After Orange Speckled (% paint loss) | Initial Adhesion (% adh. failure) | Adhesion after 10 days @ 100% RH and 100°F (% adh. failure) |
|---|---|---|---|---|---|---|
| 36 | Ex. 1 / 0.3 mil | Standard Clearcoat / 2 mil | OEM (First Coat) | 0.54% | 0% | 0% |

(continued)

| Example MLC | Liquid Metal Composition / Application Thickness | Topcoat Composition / Application Thickness | Application Method | Chip Rating After Orange Speckled (% paint loss) | Initial Adhesion (% adh. failure) | Adhesion after 10 days @ 100% RH and 100°F (% adh. failure) |
|---|---|---|---|---|---|---|
| 37 | Ex. 1 / 0.3 mil | Standard Clearcoat / 2 mil | Repair 1 | 0.36% | 0% | 0% |
| 38 | Ex. 1 / 0.3 mil | Standard Clearcoat / 2 mil | Repair 2 | 0.26% | 0% | 0% |

Referring again to Table 17, Example Multi-layered Coatings 36-38 demonstrate excellent chip resistance as well as adhesion to the substrate.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

The present invention has been described in an illustrative manner, and it is to be understood that the terminology which has been used is intended to be in the nature of words of description rather than of limitation. Obviously, many modifications and variations of the present invention are possible in light of the above teachings. It is, therefore, to be understood that within the scope of the appended claims, the present invention may be practiced otherwise than as specifically described.

**Claims**

1.  A multi-layered coating system having a flop index of greater than 10, said multi-layered coating system comprising:

    (A) a substrate;
    (B) a liquid metal layer disposed about said substrate and formed from a liquid metal composition having an application percent solids of greater than 10% and comprising;

        a binder comprising an acrylic resin and a cellulose acetate butyrate,
        a wax,
        an organic solvent, and

an aluminum pigment comprising PVD aluminum flake; and

(C) a topcoat layer disposed about said liquid metal layer and formed from a topcoat composition.

2. A multi-layered coating system as set forth in claim 1 wherein a ratio of said aluminum pigment to said binder in the liquid metal composition is less than 0.25.

3. A multi-layered coating system as set forth in any preceding claim wherein the liquid metal composition has an application percent solids of from 11% to 35%.

4. A multi-layered coating system as set forth in any preceding claim wherein said PVD aluminum flake has a particle size distribution having a D10 value from 1 to 30 $\mu$m, a D50 value from 5 to 50 $\mu$m, and a D90 value less than 75 $\mu$m.

5. A multi-layered coating system as set forth in as set forth in any preceding claim formed by a wet on wet system wherein said liquid metal layer and said topcoat layer are simultaneously cured.

6. A multi-layered coating system as set forth in as set forth in any preceding claim wherein said liquid metal layer is less than 10.2 $\mu$m (0.4 mil) thick and wherein said liquid metal layer and said topcoat layer are collectively less than 66 $\mu$m (2.6 mil) thick.

7. A method of painting a substrate with a liquid metal composition and a topcoat composition to form a multi-layered coating system, said method comprising the steps of:

applying the liquid metal composition according to anyone of claims 16-20 and comprising a binder, a wax, an organic solvent, and an aluminum pigment comprising PVD aluminum flake, onto the substrate at an application percent solids of greater than 10% to form a liquid metal layer;
applying the topcoat composition onto the liquid metal layer to form a topcoat layer; and
curing the layers to form the multi-layered coating system having a flop index of greater than 10.

8. A method as set forth in claim 7 wherein the liquid metal layer is less than 10.2 $\mu$m (0.4 mil) thick and the liquid metal layer and the topcoat layer are collectively less than 66 $\mu$m (2.6) thick.

9. A method as set forth in claim 7 or 8 wherein the step of applying the topcoat composition onto the liquid metal layer is further defined as applying the topcoat composition wet-on-wet onto the liquid metal layer such that the layers are simultaneously cured.

10. A method as set forth in any one of claims 7 through 9 further comprising the step of applying a basecoat composition onto the substrate to form a basecoat layer prior to the step of applying the liquid metal composition.

11. A method as set forth in any one of claims 7 through 10 comprising the step of applying a clearcoat composition onto the basecoat layer to form a clearcoat layer prior to the step of applying the liquid metal composition.

12. A method as set forth in any one of claims 7 through 11 wherein a ratio of the aluminum pigment to the binder in the liquid metal composition is less than 0.25 and wherein the liquid metal composition is applied at an application percent solids of from 11% to 35 %.

13. A method as set forth in any one of claims 7 through 12 wherein the multi-layered coating system has a flop index of greater than 12.

14. A method as set forth in any one of claims 7 through 13 wherein the aluminum pigment comprises a PVD aluminum flake having a particle size distribution having a D10 value from 1 to 30 $\mu$m, a D50 value from 5 to 50 $\mu$m, and a D90 value less than 75 $\mu$m and wherein the PVD aluminum flake is proximal to the substrate and oriented substantially parallel to the substrate within the liquid metal layer.

15. A method as set forth in any one of claims 7 through 14 wherein the step of applying the liquid metal composition is further defined as applying the liquid metal composition onto the substrate in a first and a second coat.

16. A liquid metal composition which forms a liquid metal layer having a flop index of greater than 10, said liquid metal composition comprising:

(A) a binder comprising an acrylic resin and a cellulose acetate butyrate;
(B) a wax;
(C) an organic solvent; and
(D) an aluminum pigment comprising PVD aluminum flake and having an application percent solids of greater than 10%.

17. A liquid metal composition as set forth in claim 16 wherein a ratio of said aluminum pigment to said binder is less than 0.25.

18. A liquid metal composition as set forth in any one of claims 16 through 17 wherein said PVD aluminum flake has a particle size distribution having a D10 value from 1 to 30 $\mu$m, a D50 value from 5 to 50 $\mu$m, and a D90 value less than 75 $\mu$m.

19. A liquid metal composition as set forth in any one of claims 16 through 18 wherein said cellulose acetate butyrate has a number average molecular weight ($M_n$) from 65,000 to 75,000 g/mol.

20. A liquid metal composition as set forth in any one of claims 16 through 19 wherein said wax comprises an ethylene-acrylic acid copolymer.


**Patentansprüche**

1. Mehrschichtiges Beschichtungssystem mit einem Flop-Index von mehr als 10, wobei das mehrschichtige Beschichtungssystem Folgendes umfasst:

(A) ein Substrat;
(B) eine über dem Substrat angeordnete Liquid-Metal-Schicht, die aus einer Liquid-Metal-Zusammensetzung mit einem prozentualen Applikationsfeststoffgehalt von mehr als 10% gebildet ist und Folgendes umfasst:

ein Bindemittel, das ein Acrylharz und ein Celluloseacetatbutyrat umfasst,
ein Wachs,
ein organisches Lösungsmittel und
ein Aluminiumpigment, das PVD-Aluminiumplättchen umfasst; und

(C) eine über der Liquid-Metal-Schicht angeordnete Decklackschicht, die aus einer Decklackzusammensetzung gebildet ist.

2. Mehrschichtiges Beschichtungssystem nach Anspruch 1, wobei das Verhältnis von Aluminiumpigment zu Bindemittel in der Liquid-Metal-Zusammensetzung weniger als 0,25 beträgt.

3. Mehrschichtiges Beschichtungssystem nach einem der vorhergehenden Ansprüche, wobei die Liquid-Metal-Zusammensetzung einen prozentualen Applikationsfeststoffgehalt von 11% bis 35% aufweist.

4. Mehrschichtiges Beschichtungssystem nach einem der vorhergehenden Ansprüche, wobei die PVD-Aluminiumplättchen eine Teilchengrößenverteilung mit einem D10-Wert von 1 bis 30 $\mu$m, einem D50-Wert von 5 bis 50 $\mu$m und einem D90-Wert von weniger als 75 $\mu$m aufweisen.

5. Mehrschichtiges Beschichtungssystem nach einem der vorhergehenden Ansprüche, gebildet durch ein Nass-in-nass-System, wobei die Liquid-Metal-Schicht und die Decklackschicht gleichzeitig gehärtet werden.

6. Mehrschichtiges Beschichtungssystem nach einem der vorhergehenden Ansprüche, wobei die Liquid-Metal-Schicht eine Dicke von weniger als 10,2 $\mu$m (0,4 mil) aufweist und wobei die Liquid-Metal-Schicht und die Decklackschicht zusammen eine Dicke von weniger als 66 $\mu$m (2,6 mil) aufweisen.

7. Verfahren zum Lackieren eines Substrats mit einer Liquid-Metal-Zusammensetzung und einer Decklackzusammensetzung zur Bildung eines mehrschichtigen Beschichtungssystems, wobei das Verfahren folgende Schritte umfasst:

Aufbringen der Liquid-Metal-Zusammensetzung nach einem der Ansprüche 16-20, die ein Bindemittel, ein Wachs, ein organisches Lösungsmittel und ein Aluminiumpigment, das PVD-Aluminiumplättchen umfasst, umfasst, auf das Substrat in einem prozentualen Applikationsfeststoffgehalt von mehr als 10% zur Bildung einer Liquid-Metal-Schicht;

Aufbringen der Decklackzusammensetzung auf die Liquid-Metal-Schicht zur Bildung einer Decklackschicht; und Härten der Schichten zur Bildung des mehrschichtigen Beschichtungssystems mit einem Flop-Index von mehr als 10.

8. Verfahren nach Anspruch 7, bei dem die Liquid-Metal-Schicht eine Dicke von weniger als 10,2 $\mu$m (0,4 mil) aufweist und wobei die Liquid-Metal-Schicht und die Decklackschicht zusammen eine Dicke von weniger als 66 $\mu$m (2,6 mil) aufweisen.

9. Verfahren nach Anspruch 7 oder 8, bei dem der Schritt des Aufbringens der Decklackzusammensetzung auf die Liquid-Metal-Schicht ferner definiert ist als das Aufbringen der Decklackzusammensetzung nass-in-nass auf die Liquid-Metal-Schicht, so dass die Schichten gleichzeitig gehärtet werden.

10. Verfahren nach einem der Ansprüche 7 bis 9, ferner umfassend den Schritt des Aufbringens einer Basislackzusammensetzung auf das Substrat zur Bildung einer Basislackschicht vor dem Schritt des Aufbringens der Liquid-Metal-zusammensetzung.

11. Verfahren nach einem der Ansprüche 7 bis 10, umfassend den Schritt des Aufbringens einer Klarlackzusammensetzung auf der Basislackschicht zur Bildung einer Klarlackschicht vor dem Schritt des Aufbringens der Liquid-Metal-Zusammensetzung.

12. Verfahren nach einem der Ansprüche 7 bis 11, bei dem das Verhältnis von Aluminiumpigment zu Bindemittel in der Liquid-Metal-Zusammensetzung weniger als 0,25 beträgt und die Liquid-Metal-Zusammensetzung in einem prozentualen Applikationsfeststoffgehalt von 11% bis 35% aufgebracht wird.

13. Verfahren nach einem der Ansprüche 7 bis 12, bei dem das mehrschichtige Beschichtungssystem einen Flop-Index von mehr als 12 aufweist.

14. Verfahren nach einem der Ansprüche 7 bis 13, bei dem das Aluminiumpigment PVD-Aluminiumplättchen mit einer Teilchengrößenverteilung mit einem D10-Wert von 1 bis 30 $\mu$m, einem D50-Wert von 5 bis 50 $\mu$m und einem D90-Wert von weniger als 75 $\mu$m umfasst und wobei sich die PVD-Aluminiumplättchen in der Liquid-Metal-Schicht in der Nähe des Substrats befinden und weitgehend parallel zum Substrat orientiert sind.

15. Verfahren nach einem der Ansprüche 7 bis 14, bei dem der Schritt des Aufbringens der Liquid-Metal-Zusammensetzung ferner definiert ist als das Aufbringen der Liquid-Metal-Zusammensetzung auf das Substrat in einer ersten und einer zweiten Schicht.

16. Liquid-Metal-Zusammensetzung, die eine Liquid-Metal-Schicht mit einem Flop-Index von mehr als 10 bildet, wobei die Liquid-Metal-Zusammensetzung Folgendes umfasst:

(A) ein Bindemittel, das ein Acrylharz und ein Celluloseacetatbutyrat umfasst;
(B) ein Wachs;
(C) ein organisches Lösungsmittel; und
(D) ein Aluminiumpigment, das PVD-Aluminiumplättchen umfasst;

und einen prozentualen Applikationsfeststoffgehalt von mehr als 10% aufweist.

17. Liquid-Metal-Zusammensetzung nach Anspruch 16, wobei das Verhältnis von Aluminiumpigment zu Bindemittel weniger als 0,25 beträgt.

18. Liquid-Metal-Zusammensetzung nach einem der Ansprüche 16 bis 17, wobei die PVD-Aluminiumplättchen eine Teilchengrößenverteilung mit einem D10-Wert von 1 bis 30 $\mu$m, einem D50-Wert von 5 bis 50 $\mu$m und einem D90-Wert von weniger als 75 $\mu$m aufweisen.

19. Liquid-Metal-Zusammensetzung nach einem der Ansprüche 16 bis 18, wobei das Celluloseacetatbutyrat ein zah-

lenmittleres Molekulargewicht ($M_n$) von 65.000 bis 75.000 g/mol aufweist.

**20.** Liquid-Metal-zusammensetzung nach einem der Ansprüche 16 bis 19, wobei das Wachs ein EthylenAcrylsäure-Copolymer umfasst.

**Revendications**

**1.** Système de revêtement multicouche ayant un indice flop supérieur à 10, ledit système de revêtement multicouche comprenant :

(A) un substrat ;
(B) une couche de métal liquide disposée autour dudit substrat et formée d'une composition de métal liquide ayant un pourcentage d'application de matières solides supérieur à 10 % et comprenant ;

un liant comprenant une résine acrylique et un acétate-butyrate de cellulose,
une cire,
un solvant organique, et
un pigment d'aluminium comprenant un flocon d'aluminium PVD ; et

(C) une couche de finition disposée autour de ladite couche de métal liquide et formée d'une composition de couche de finition.

**2.** Système de revêtement multicouche selon la revendication 1 dans lequel un rapport dudit pigment d'aluminium audit liant dans la composition de métal liquide est inférieur à 0,25.

**3.** Système de revêtement multicouche selon l'une quelconque des revendications précédentes dans lequel la composition de métal liquide présente un pourcentage d'application de matières solides de 11 % à 35 %.

**4.** Système de revêtement multicouche selon l'une quelconque des revendications précédentes dans lequel ledit flocon d'aluminium PVD a une granulométrie ayant une valeur D10 de 1 à 30 $\mu$m, une valeur D50 de 5 à 50 $\mu$m, et une valeur D90 inférieure à 75 $\mu$m.

**5.** Système de revêtement multicouche selon l'une quelconque des revendications précédentes formé par un système humide sur humide dans lequel ladite couche de métal liquide et ladite couche de finition sont durcies simultanément.

**6.** Système de revêtement multicouche selon l'une quelconque des revendications précédentes dans lequel ladite couche de métal liquide a une épaisseur inférieure à 10,2 $\mu$m (0,4 mil) et dans lequel ladite couche de métal liquide et ladite couche de finition ont collectivement une épaisseur inférieure à 66 $\mu$m (2,6 mil).

**7.** Procédé de peinture d'un substrat avec une composition de métal liquide et une composition de couche de finition pour former un système de revêtement multicouche, ledit procédé comprenant les étapes de :

application de la composition de métal liquide selon l'une quelconque des revendications 16 à 20 et comprenant un liant, une cire, un solvant organique, et un pigment d'aluminium comprenant un flocon d'aluminium PVD, sur le substrat à un pourcentage d'application de matières solides supérieur à 10 % pour former une couche de métal liquide ;
application de la composition de couche de finition sur la couche de métal liquide pour former une couche de finition ; et
durcissement des couches pour former le système de revêtement multicouche ayant un indice flop supérieur à 10.

**8.** Procédé selon la revendication 7 dans lequel la couche de métal liquide a une épaisseur inférieure à 10,2 $\mu$m (0,4 mil) et la couche de métal liquide et la couche de finition ont collectivement une épaisseur inférieure à 66 $\mu$m (2,6).

**9.** Procédé selon la revendication 7 ou 8 dans lequel l'étape d'application de la composition de couche de finition sur la couche de métal liquide est en outre définie comme étant l'application la composition de couche de finition humide-sur-humide sur la couche de métal liquide de sorte que les couches soient durcies simultanément.

**10.** Procédé selon l'une quelconque des revendications 7 à 9 comprenant en outre l'étape d'application d'une composition de couche de fond sur le substrat pour former une couche de fond avant l'étape d'application de la composition de métal liquide.

**11.** Procédé selon l'une quelconque des revendications 7 à 10 comprenant l'étape d'application d'une composition de couche d'enduit lustré sur la couche de fond pour former une couche d'enduit lustré avant l'étape d'application de la composition de métal liquide.

**12.** Procédé selon l'une quelconque des revendications 7 à 11 dans lequel un rapport du pigment d'aluminium au liant dans la composition de métal liquide est inférieur à 0,25 et dans lequel la composition de métal liquide est appliquée à un pourcentage d'application de matières solides de 11 % à 35 %.

**13.** Procédé selon l'une quelconque des revendications 7 à 12 dans lequel le système de revêtement multicouche présente un indice flop supérieur à 12.

**14.** Procédé selon l'une quelconque des revendications 7 à 13 dans lequel le pigment d'aluminium comprend un flocon d'aluminium PVD ayant une granulométrie ayant une valeur D10 de 1 à 30 $\mu$m, une valeur D50 de 5 à 50 $\mu$m, et une valeur D90 inférieure à 75 $\mu$m et dans lequel le flocon d'aluminium PVD est proximal par rapport au substrat et orienté de façon sensiblement parallèle au substrat dans la couche de métal liquide.

**15.** Procédé selon l'une quelconque des revendications 7 à 14 dans lequel l'étape d'application de la composition de métal liquide est en outre définie comme étant l'application de la composition de métal liquide sur le substrat dans une première et une deuxième couche.

**16.** Composition de métal liquide qui forme une couche de métal liquide ayant un indice flop supérieur à 10, ladite composition de métal liquide comprenant :

(A) un liant comprenant une résine acrylique et un acétate-butyrate de cellulose ;
(B) une cire ;
(C) un solvant organique ; et
(D) un pigment d'aluminium comprenant un flocon d'aluminium PVD et ayant un pourcentage d'application de matières solides supérieur à 10 %.

**17.** Composition de métal liquide selon la revendication 16 dans laquelle un rapport dudit pigment d'aluminium audit liant est inférieur à 0,25.

**18.** Composition de métal liquide selon l'une quelconque des revendications 16 à 17 dans laquelle ledit flocon d'aluminium PVD a une granulométrie ayant une valeur D10 de 1 à 30 $\mu$m, une valeur D50 de 5 à 50 $\mu$m, et une valeur D90 inférieure à 75 $\mu$m.

**19.** Composition de métal liquide selon l'une quelconque des revendications 16 à 18 dans laquelle ledit acétate-butyrate de cellulose a un poids moléculaire moyen en nombre ($M_n$) de 65 000 à 75 000 g/mol.

**20.** Composition de métal liquide selon l'une quelconque des revendications 16 à 19 dans laquelle ladite cire comprend un copolymère d'éthylène-acide acrylique.

# FIG. 1

14

Applying a Liquid Metal Composition onto a
Substrate to Form a Liquid Metal Layer

Applying a Topcoat Composition onto the
Liquid Metal Layer to Form a Topcoat Layer

Curing the Layers to Form a Multi-Layered
Coating on the Substrate

# FIG. 2

# FIG. 3

14

```
┌─────────────────────────────────────┐
│ Applying a Basecoat Composition onto a│
│   Substrate to Form a Basecoat Layer  │
└─────────────────────────────────────┘
                    │
                    ▼
┌─────────────────────────────────────┐
│        Curing the Basecoat Layer      │
└─────────────────────────────────────┘
                    │
                    ▼
┌─────────────────────────────────────┐
│  Applying a Liquid Metal Composition onto│
│   the Basecoat Layer to Form a Liquid Metal│
│                 Layer                  │
└─────────────────────────────────────┘
                    │
                    ▼
┌─────────────────────────────────────┐
│  Applying a Topcoat Composition onto the│
│  Liquid Metal Layer to Form a Topcoat Layer│
└─────────────────────────────────────┘
                    │
                    ▼
┌─────────────────────────────────────┐
│  Curing the Liquid Metal Layer and the│
│  Topcoat Layer Simultaneously to Form a│
│  Multi-Layered Coating on the Substrate│
└─────────────────────────────────────┘
```

# FIG. 4

14

## FIG. 5

```
Applying a Basecoat Composition onto a
Substrate to Form a Basecoat Layer
```

↓

```
Applying a Clearcoat Composition onto the
Basecoat Layer to Form a Clearcoat Layer
```

↓

```
Curing the Basecoat Layer and the Clearcoat
Layer Simultaneously
```

↓

```
Applying a Liquid Metal Composition onto
the Clearcoat Layer to Form a Liquid Metal
Layer
```

↓

```
Applying a Topcoat Composition onto the
Liquid Metal Layer to Form a Topcoat
Layer
```

↓

```
Curing the Liquid Metal Layer and the
Topcoat Layer Simultaneously to Form a
Multi-Layered Coating on the Substrate
```

12

24

20

16

24

22

10

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2158280 A1

- EP 1591492 A1